# EUROPÄISCHE PATENTANMELDUNG

(11) **EP 2 190 079 A2**
(43) Veröffentlichungstag der Anmeldung: **26.05.2010**
(21) Anmeldenummer: 09176021.5
(22) Anmeldetag: 16.11.2009
(51) Int. Cl.: H01R 24/04, H01R 35/04

(54) **Vorrichtung für den Leitungsanschluß am Gehäuse von elektrischen Maschinen**

(30) Priorität: 24.11.2008 DE 202008013796 U
(71) Anmelder: Intercontec Pfeiffer Steckverbindungen GmbH, 94559 Niederwinkling (DE)
(72) Erfinder: Pfeiffer, Wolfgang, 94559, Niederwinkling (DE)
(74) Vertreter: Gustorf, Gerhard

(57) **Zusammenfassung**

Die Vorrichtung dient für den Leitungsanschluss am Gehäuse (10) von elektrischen Maschinen, insbesondere Kleinmotoren. Sie ist gekennzeichnet durch einen an dem Gehäuse (10) befestigten Sockel (18) mit einer Öffnung (50) für die Durchführung von elektrischen Kabeln zu wenigstens einem Steckverbinder (28) und durch ein im Sockel (18) schwenkbar gelagertes Aufnahmegehäuse (22) für den wenigstens einen Steckverbinder (28) mit stiftförmigen Kontaktelementen (30).

## Beschreibung

Die vorliegende Erfindung betrifft eine Vorrichtung für den Leitungsanschluß am Gehäuse von elektrischen Maschinen, insbesondere Kleinmotoren.

Für die Versorgung von elektrischen Maschinen sind deren Gehäuse regelmäßig mit festen Leitungsanschlüssen ausgerüstet, die in aller Regel rechtwinklig nach oben oder seitlich aus dem Gehäuse herausgeführt sind. Besonders bei Kleinstmotoren, die in einer vorgegebenen Position eingebaut werden müssen, führt dies oftmals zu Schwierigkeiten bei der Leitungsverlegung, insbesondere bei beengten Platzverhältnissen.

Der Erfindung liegt die Aufgabe zugrunde, hier Abhilfe zu schaffen und eine Vorrichtung zur Verfügung zu stellen, bei der die elektrischen Leitungskabel bei kleinstem Bauraum in jeder gewünschten Richtung relativ zu dem Gehäuse der Maschine verlegt werden können.

Zur Lösung dieser Aufgabe ist gemäß der Erfindung ein an dem Gehäuse befestigter Sockel mit einer Öffnung für die Durchführung von elektrischen Kabeln zu wenigstens einem Steckverbinder vorgesehen, wobei in dem Sockel ein Aufnahmegehäuse für den wenigstens einen Steckverbinder mit stiftförmigen Kontaktelementen schwenkbar gelagert ist.

Mit der Erfindung steht eine sehr kompakte Baueinheit für den Leitungsanschluß an elektrischen Maschinen zur Verfügung, die den Vorteil hat, dass die Kabelabgangsrichtung durch die stufenlose Schwenkbarkeit des Aufnahmegehäuses variabel ist. Die Kabel müssen daher nicht mehr gebogen, geknickt oder umgelenkt werden.

Bei einer Ausführungsform der Erfindung ist vorgesehen, dass das Aufnahmegehäuse zwei parallel nebeneinander angeordnete Sitze für je einen Steckverbinder aufweist. Dabei kann ein Steckverbinder für den Anschluß von Leistungskabeln ausgebildet sein, während der andere Steckverbinder für den Anschluß von Signalleitungen dient.

Es ist von besonderem Vorteil, wenn die Schwenkachse des Aufnahmegehäuses rechtwinklig zu den Achsen der stiftförmigen Kontaktelemente der Steckverbinder verläuft. Damit wird die Bauhöhe auf ein Mindestmaß begrenzt, und die Vorrichtung eignet sich vor allem für Kleinstmotoren.

In Weiterbildung der Erfindung ist vorgesehen, dass die Schwenkbarkeit des Aufnahmegehäuses auf dem Gehäuse der elektrischen Maschine durch verstellbare Anschlagmittel auf einen Schwenkwinkel von maximal 360° begrenzt ist. Damit wird verhindert, dass die elektrischen Kabel geschont werden, die bei Schwenkwinkeln über 360° verdrillt und beschädigt oder gar zerstört würden. Da die Anschlagmittel verstellbar sind, lässt sich der Grenzwinkel bei jeder gewählten Kabelabgangsrichtung voll ausnutzen.

Nach einem weiteren Merkmal der Erfindung ist das Aufnahmegehäuse durch einen abnehmbaren Deckel abgeschlossen, so dass einerseits die Montage der Steckverbinder erleichtert wird und andererseits Wartungsarbeiten einfach durchgeführt werden können.

Die Erfindung ist nachstehend mit weiteren Vorteilen an einem Ausführungsbeispiel erläutert, das in der Zeichnung dargestellt ist. Es zeigen:
Figur 1 in Draufsicht das Gehäuse eines Kleinmotors mit der erfindungsgemäß ausgebildeten Leitungsanschlußvorrichtung, wobei im rechten Teil der Figur 1 vier unterschiedliche Kabelabgangsrichtungen dargestellt sind,
Figur 2 eine Explosionsdarstelllung der Vorrichtung gemäß der Erfindung mit zwei Steckverbindern,
Figur 3 eine Variante des Aufnahmegehäuses der Figur 2 mit nur einem Sitz für einen Steckverbinder,
Figur 4 eine teilweise geschnittene Ansicht des Aufnahmegehäuses mit zwei Steckverbinderanschlüssen gemäß Figur 2 und
Figur 5 die geschlossene Ansicht des Aufnahmegehäuses der Figur 4.

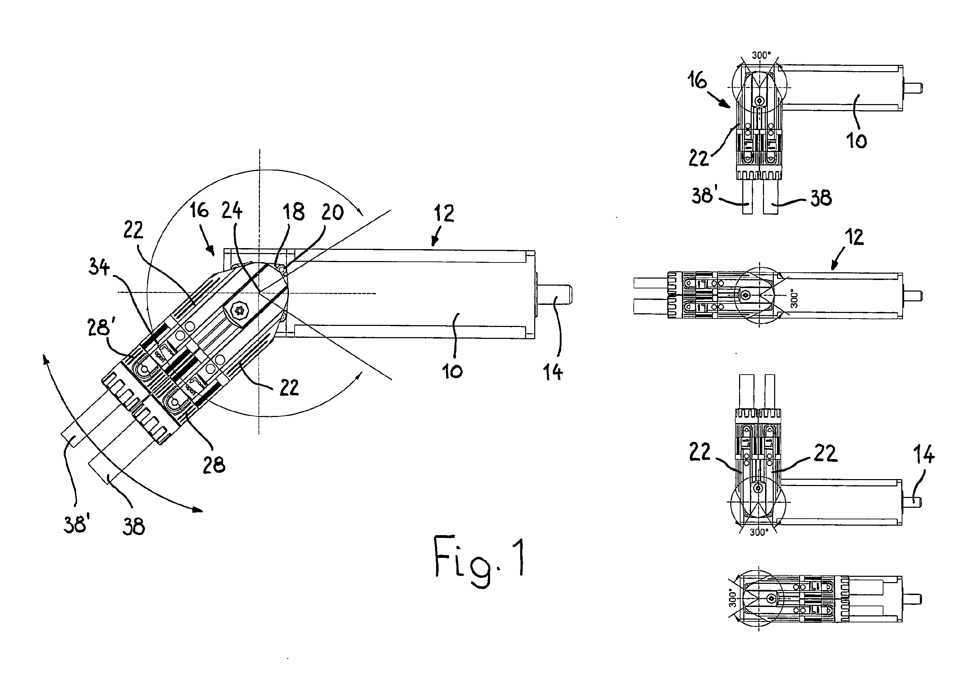

Figur 1 zeigt in Draufsicht das Gehäuse 10 eines elektrischen Kleinmotors 12, dessen Motorwelle 14 in der dargestellten Lage horizontal aus dem Gehäuse 10 herausragt. Auf dem Gehäuse 10 ist am der Motorwelle 14 gegenüberliegenden Ende eine Vorrichtung 16 gemäß der Erfindung angebracht, die einen flanschartigen Sockel 18 hat, welcher über vier Schrauben 20 auf dem Gehäuse 10 befestigt ist. In dem Sockel 18 ist ein Aufnahmegehäuse 22 um eine senkrechte Achse 24 schwenkbar gelagert. Der durch einen kreisförmigen Pfeil angedeutete Schwenkwinkel ist über nicht weiter dargestellte Anschlagmittel auf hier 300° begrenzt.

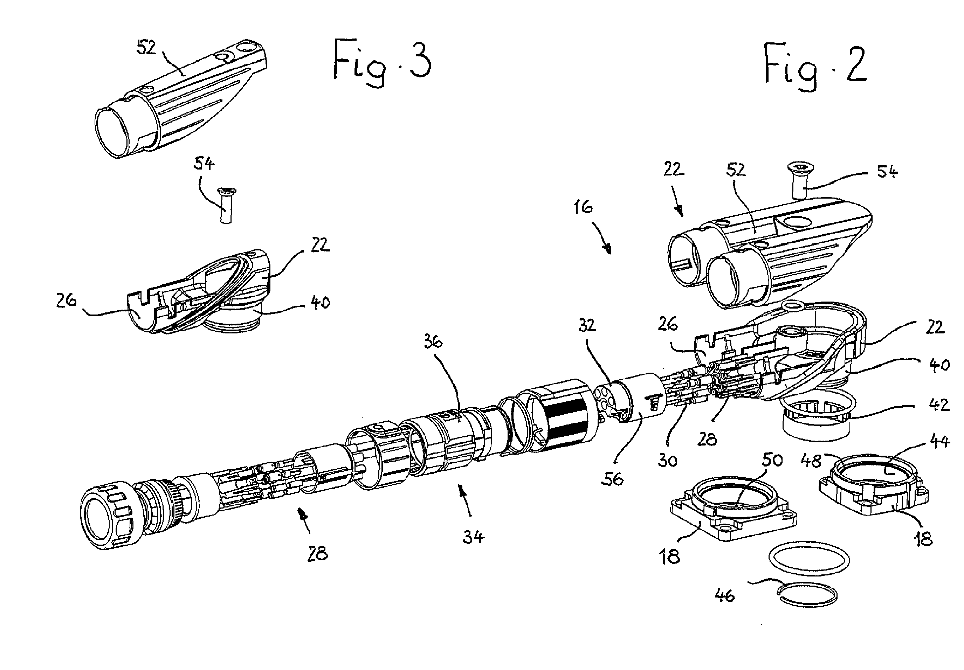

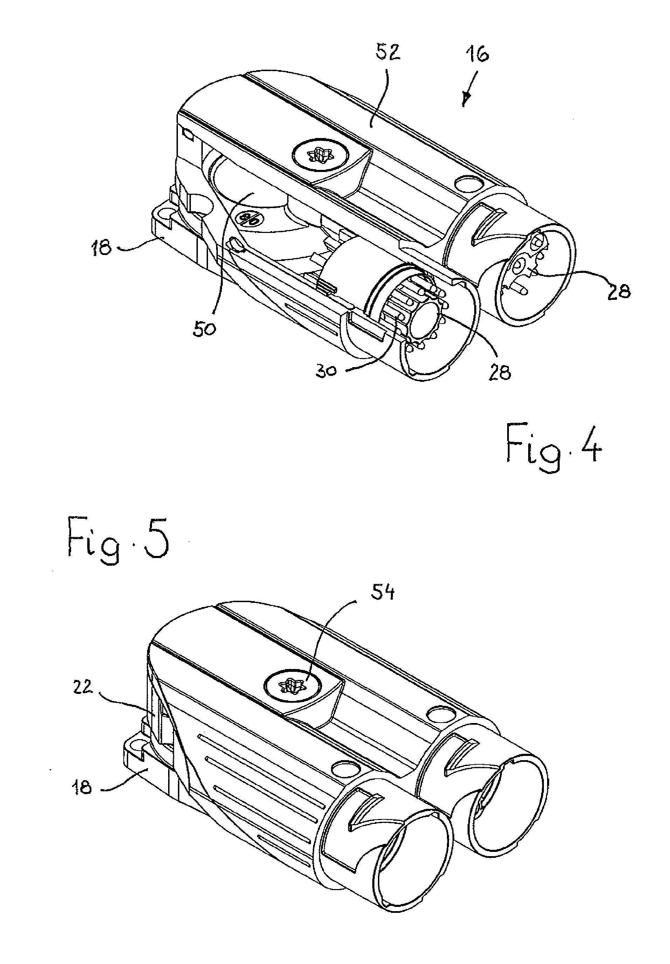

Das Aufnahmegehäuse 22 ist im Fall der Figur 1 ein Zwillingsgehäuse, wie es in den Figuren 2, 4 und 5 dargestellt ist. Dieses Zwillingsgehäuse 22 hat gemäß Figur 2 zwei parallel nebeneinander angeordnete Sitze 26, von denen jeder einen Steckverbinder 28 mit stiftförmigen Kontaktelementen 30 aufnimmt. Im montierten Zustand greifen die Kontaktelemente 30 in eine Steckerbuchse 32 ein, die über eine Kupplung 34 mit einer Überwurfmutter 36 mit einem weiteren Steckverbinder 28 verbunden werden kann. Dieser weitere Steckverbinder 28 ist am Ende eines Kabels 38 (Figur 1) befestigt.

Im rechten Teil der Figur 1 sind vier Möglichkeiten für die Kabelabgangsrichtung von dem Motorgehäuse 10 dargestellt. Aus der eingezeichneten Grundrichtung rechtwinklig bzw. parallel zum Motorgehäuse 10 lässt sich die Kabelabgangsrichtung innerhalb des erwähnten Schwenkwinkels von hier 300° verändern.

Aus der Explosionsdarstellung der Vorrichtung gemäß Figur 2 ergibt sich, dass das Aufnahmegehäuse 22 für die beiden Steckverbinder 28 einen senkrecht nach unten abstehenden, ringförmigen Lageransatz 40 hat, der über ein Gleitlager 42 in eine zylindrische Lagerbuchse 44 des Sockels 18 drehbar eingreift. Auch aus Figur 2 wird deutlich, dass die hier nicht weiter angegebene, senkrechte Schwenkachse 24 (vgl. Figur 1) rechtwinklig zu den hier horizontalen Achsen der stiftförmigen Kontaktelemente 30 der beiden Steckverbinder 28 verläuft (zur besseren Darstellung ist in Figur 2 der zweite Sitz 26 für einen weiteren Steckverbinder leer dargestellt). Daraus wird deutlich, dass die Kabelabgangsrichtung der in Figur 2 nicht eingezeichneten Kabel 38 (vgl. Figur 1) waagrecht zur Schwenkachse 24 verläuft.

Der ringförmige Lageransatz 40 ist über einen in Figur 2 unten dargestellten Sprengring 46, der in eine Ringnut 48 des Sockels 18 eingreift, axial fest, jedoch drehbar in dem Sockel 18 gelagert.

Der Sockel 18 hat eine mittige Öffnung 50 für die Durchführung der elektrischen Kabel vom Motor 10 zu den beiden Steckverbindern 28.

Im bisher beschriebenen Ausführungsbeispiel hat das Aufnahmegehäuse 22 zwei parallel nebeneinander angeordnete Sitze 26, von denen einer den Steckverbinder 28 für den Anschluss von Leistungskabeln 38 (vgl. Figur 1) und der andere den Steckverbinder 28' für den Anschluss von Signalleitungen 38' aufnimmt.

Figur 2 zeigt weiter, dass das Aufnahmegehäuse 22 durch einen abnehmbaren Deckel 52 abgeschlossen ist, der mittels einer Schraube 54 am Aufnahmegehäuse 22 befestigt werden kann.

In Figur 2 ist schließlich angedeutet, dass die Steckverbinder 28 über einen Isolierkörper 56 im jeweiligen Sitz 26 des Aufnahmegehäuses 22 fixiert sind.

Die Variante der Figur 3 deutet an, dass die Vorrichtung gemäß der Erfindung auch für nur einen Kabelstrang ausgebildet sein kann. In diesem Fall hat das Aufnahmegehäuse 22 nur einen Sitz 26 für einen hier nicht gezeigten Steckverbinder.

## Patentansprüche

1. Vorrichtung für den Leitungsanschluss am Gehäuse von elektrischen Maschinen, insbesondere Kleinmotoren, **gekennzeichnet durch** einen an dem Gehäuse (10) befestigten Sockel (18) mit einer Öffnung (50) für die Durchführung von elektrischen Kabeln zu wenigstens einem Steckverbinder (28) und **durch** ein im Sockel (18) schwenkbar gelagertes Aufnahmegehäuse (22) für den wenigstens einen Steckverbinder (28) mit stiftförmigen Kontaktelementen (30).

2. Vorrichtung nach Anspruch 1, **dadurch gekennzeichnet, dass** das Aufnahmegehäuse (22) zwei parallel nebeneinander angeordnete Sitze (26) für je einen Steckverbinder (28) aufweist.

3. Vorrichtung nach Anspruch 2, **dadurch gekennzeichnet, dass** ein Steckverbinder (28) für den Anschluss von Leistungskabeln (38) und der andere Steckverbinder (28) für den Anschluss von Signalleitungen (38') ausgebildet ist.

4. Vorrichtung nach einem der vorhergehenden Ansprüche, **dadurch gekennzeichnet, dass** der wenigstens eine Steckverbinder (28) über einen Isolierkörper (56) in dem Sitz (26) des Aufnahmegehäuses (22) angebracht ist.

5. Vorrichtung nach einem der vorhergehenden Ansprüche, **dadurch gekennzeichnet, dass** die Schwenkachse (24) des Aufnahmegehäuses (22) rechtwinklig zu den Achsen der stiftförmigen Kontaktelemente (30) verläuft.

6. Vorrichtung nach einem der vorhergehenden Ansprüche, **dadurch gekennzeichnet, dass** das Aufnahmegehäuse (22) einen ringförmigen Lageransatz (40) hat, der über ein Gleitlager (42) in einer zylindrischen Lagerbuchse (44) des Sockels (18) gelagert ist.

7. Vorrichtung nach einem der vorhergehenden Ansprüche, **dadurch gekennzeichnet, dass** die Schwenkbarkeit des Aufnahmegehäuses (22) auf dem Gehäuse (10) der elektrischen Maschine durch verstellbare Anschlagmittel auf einen Schwenkwinkel von maximal 360° begrenzt ist.

8. Vorrichtung nach einem der vorhergehenden Ansprüche, **dadurch gekennzeichnet, dass** das Aufnahmegehäuse (22) durch einen abnehmbaren Deckel (52) abgeschlossen ist.
